**Europäisches Patentamt**

**European Patent Office**

**Office européen des brevets**

(19)

(11) Publication number: **0 163 063**

**A2**

(12)

# EUROPEAN PATENT APPLICATION

(21) Application number: **85104044.4**

(22) Date of filing: **03.04.85**

(51) Int. Cl.⁴: **G 01 N 21/07**

(30) Priority: **31.05.84 US 615401**

(43) Date of publication of application:
**04.12.85 Bulletin 85/49**

(84) Designated Contracting States:
**DE FR GB IT**

(71) Applicant: **ALLIED CORPORATION
Columbia Road and Park Avenue P.O. Box 2245R (Law Dept.)
Morristown New Jersey 07960(US)**

(72) Inventor: **Tiffany, Thomas O.
East 1305, 56th Avenue
Spokane Washington 99203(US)**

(72) Inventor: **Keramaty, Hamid
72 Prospect Hill Road
Lexington Massachusetts 02173(US)**

(72) Inventor: **Brickus, Romas A.
101 Wolcott Road
Brookline Massachusetts 02146(US)**

(74) Representative: **Brullé, Jean et al,
Service Brevets Bendix 44, rue François 1er
F-75008 Paris(FR)**

(54) **Cuvette rotors for centrifugal analyzers.**

(57) A multicuvette rotor for use in a centrifugal analyzer that includes a rotor drive for rotating the rotor at rates greater than one thousand rpm for mixing reactants and performing analyses while the rotor is being driven in rotation defines a circumferential array of elongated radially extending cuvettes. Each elongated cuvette defines a first chamber for receiving a first reactant and a loading port through which the first reactant is introduced into the first chamber region, a second chamber region for receiving a second reactant and a loading port through which the second reactant is introduced into the second chamber region, and divider structure between the first and second chamber regions that provides a transfer passage between the first and second chamber regions through which the first reactant may be flowed into the second chamber region for forming a reaction product with the second reactant. An analysis region is defined adjacent the radially outer wall of each cuvette where the resulting reaction product is subjected to analysis, the analysis regions being disposed in a circumferential array adjacent the periphery of the rotor, and mechanical interlock structure that is radially aligned with the analysis regions is adapted to receive a thermal sensor carried by the rotor drive for monitoring analysis region temperature during data acquisition.

FIG. 1

CUVETTE ROTORS FOR CENTRIFUGAL ANALYZERS

This invention relates to analytical systems, and more particularly to centrifugal analyzer cuvette rotors for use in analyzer systems of the centrifugal type.

Centrifugal analyzers are useful in performing a variety of analyses, including kinetic and endpoint analyses, by such techniques as absorption, light scattering and fluorescence. In general, such analyzers utilize a multicuvette rotor assembly which has a circumferential array of spaced elongated radially extending cuvettes, each of which has an inner chamber for initially holding a first reactant which frequently is a sample of blood or other biological fluid, and an outer chamber for initially holding one or more different reactants. Divider structure such as a ramp separates the two chambers, and reactants are transferred by centrifugal force to an analysis region at the outer end of the cuvette for mixing and reaction and subsequent analysis of the reaction by photometric or other analysis technique.

Such rotors may be of the reusable type, as disclosed in Stein et al. U.S. Patent 4,314,970 for example or of the disposable type as disclosed in Tiffany et al. U.S. Patent 4,226,531 for example. Reusable rotors are difficult to clean adequately and to safeguard against possibilities of error from cross-contamination and the like. For these reasons single use disposable rotors of the type shown in the above-mentioned Tiffany patent are frequently used. Such rotors are of compact size (about ten centimeters in diameter) and are composed of cover and body members that are permanently joined by ultrasonic welding to individually seal the twenty cuvettes. The rotor disclosed in each of the above patents has twenty

- 2 -

cuvettes that are loaded successively with automated loading equipment, small quantities of sample plus optional quantities of diluent and second reagent (volumes in the range of 2 - 100 microliters) typically being loaded into the inner chambers and reagents in quantities of up to two-hundred microliters being loaded into the outer chambers. The loaded cuvette rotor is then transferred to an analyzer for photometric and/or fluorescence analysis. In a typical analysis sequence, the rotor assembly is accelerated to about 4,000 rpm in about one second for combining sample and reagent, then braked for further mixing, and then brought up to about a speed of about 1,000 rpm for analysis.

Such analyzers are commonly used in the analysis of biological fluids such as blood, blood plasma or serum components, and perform absorbance mode analyses for glucose, cholesterol, creatinine, total protein, calcium, phosphorous, enzymes, and the like, and fluorescence or light scattering mode analyses for glucose, bile acids, phenytoin, theophylline, gentamycin and the like. To achieve desired analysis accuracies, the analysis regions at the outer end of each of the cuvettes of the rotor should have precise and stable dimensional accuracies that are uniform between the several cuvettes of the rotor; the analysis regions should be maintained at controlled and stable temperatures where temperature dependent reactions are involved; and the analysis regions should be located at known and accurate angular positions.

In accordance with one aspect of the invention, there is provided a multicuvette rotor for use in a centrifugal analyzer that includes a rotor drive for rotating the rotor at rates greater than one thousand rpm for mixing reactants and performing analyses while the rotor is being driven in rotation. The rotor defines a circumferential array of elongated radially extending cuvettes, and each elongated cuvette defines a first chamber for receiving a first reactant and a loading port through which the first reactant is introduced into the first chamber region, a second chamber region for receiving a second reactant and a loading port through which the second reactant is introduced into the second chamber region, and divider structure between the first and second chamber regions provides a transfer passage between the first and second chamber regions through which the first reactant may be flowed into the second chamber region for forming a reaction product with the second reactant. An analysis region is defined adjacent the radially outer wall of each cuvette where the resulting reaction product is subjected to analysis, the analysis regions being disposed in a circumferential array adjacent the periphery of the rotor. Mechanical interlock structure that is radially aligned with the analysis regions is adapted to receive a thermal sensor carried by the rotor drive for monitoring analysis region temperature during data acquisition.

In preferred embodiments the rotor defines a reference position in which the mechanical interlock is disposed, and that mechanical interlock includes a socket for receiving a thermal sensor carried by the rotor support table of the analyzer for thermal monitoring at the radial location of said analysis regions. This socket also provides improved positioning and alignment of the analysis regions of the rotor with the data acquisition equipment of the analyzer. A single use rotor embodiment includes a one-piece body member of transparent material that defines a circumferential array of elongated cuvette recesses and has optical window structure aligned with the analysis regions and with the socket, and a one-piece cover member of transparent material that is secured to the body member with a continuous seal extending around each cuvette recess to define the circumferential array of analytical cuvettes and has similar optical end window structure adjacent its periphery that is aligned with the optical window structure in the body member. The length of the optical path between the windows in each analysis region is greater than the circumferential width or radial length of the analysis region, is about six times the thickness of each optical window, and is about fifty percent greater than in the rotors of the above mentioned Stein and Tiffany patents, so that significant signal-to-noise ratio improvement results. In a particular embodiment, solid radial webs separate the adjacent cuvette recesses, the body member in which the cuvette recesses are defined has a recessed annular optical window region in which the mechanical interlock socket is disposed, and the cover member is a disk that has a similar annular optical window region adjacent its periphery that is aligned with the annular optical window recess in the body member.

In a particular embodiment, the rotor assembly has a diameter of about ten centimeters and an overall height of about one centimeter, and defines thirty-nine analysis cuvettes. The loading ports for the inner cuvette chambers are in a circumferential array, the loading ports for the outer cuvette chambers in an outer circumferential array and the upper and lower analysis region windows are defined by aligned annular optical recesses, each of which has an inner radius of about four centimeters, a width of about five millimeters and a planar base surface that is recessed about 1/4 millimeter and has an optical finish better than three microinches. The inner surfaces of each analysis region are of similar optical quality while other surfaces of the cuvette chambers have greater roughness that is effective to retard wicking tendencies. Each cuvette of that rotor has a length of about three centimeters; and its planar top (ceiling) and bottom (floor) walls are spaced apart about 3/4 centimeter in the analysis regions.

Rotors in accordance with particular features of the invention provide compact, economical single-use centrifugal analyzer rotors that are compatible with automated rotor handling equipment and have improved signal-to-noise ratio, improved thermal monitoring and improved analysis region positioning during data acquisition.

Other features and advantages of the invention will be seen as the following description of a particular embodiment progresses, in conjunction with the drawings, in which:

Fig. 1 is a top plan view (with portions broken away) of a multicuvette rotor assembly in accordance with the invention;

Fig. 2 is a side view (with portions broken away) of the rotor assembly shown in Fig. 1, together with additional rotors (shown in chain line) in stacked relationship;

Fig. 3 is a bottom view of the rotor assembly shown in Fig. 1;

Fig. 4 is a sectional perspective view showing details of a cuvette in the rotor assembly shown in Fig. 1;

Fig. 5 is a sectional view taken along the line 5-5 of Fig. 1; and

Figs. 6-9 are sectional views taken along the lines 6-6, 7-7, 8-8 and 9-9 respectively of Fig. 5.

Description of Particular Embodiment

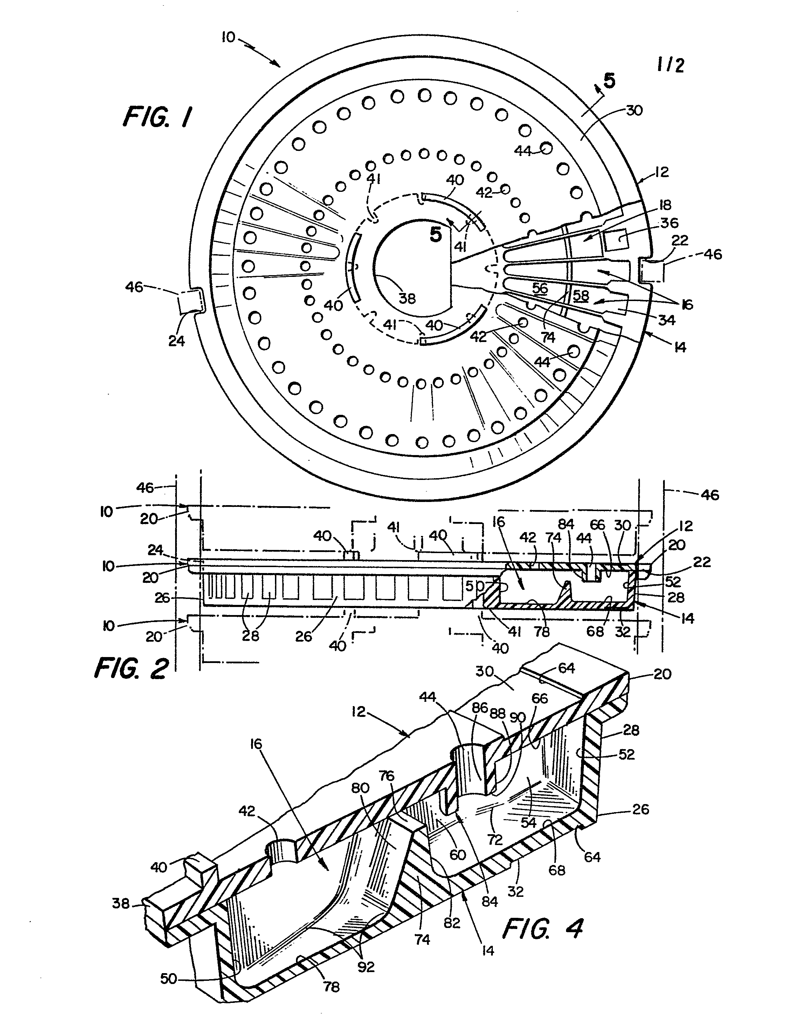

With reference to Figs. 1-3, rotor assembly 10 has a diameter of about ten centimeters and an overall height of about 1 1/4 centimeters, and is formed of an injection-molded acrylic cover member 12 and an injection-molded acrylic body member 14 that are ultrasonically welded together, the body and cover members having appropriate transparency, chemical resistance, and optical characteristics for photometric analysis. Rotor assembly 10 defines a circumferential array of thirty-nine individual analysis cuvettes 16 (plus a reference region 18 of similar configuration) and has circumferential flange structure 20 at its periphery in which are formed alignment recesses 22, 24. A series of optical end windows 28, one for each cuvette 16, are formed by continuous circumferential surface 26 below flange lip 20. Annular optical window channel recess 30 (about 1/2 centimeter wide with its inner edge at about four centimeters radius) is formed in the upper surface of rotor assembly 10, and a corresponding continuous annular optical window channel recess 32 is formed in the lower surface of rotor 10, channels 30, 32 being aligned and defining cuvette analysis regions 34 therebetween. Socket recess 36 that interrupts lower channel 32, has a width of about 0.5 centimeter, a length (radial rotor direction) of about 0.6 centimeter, and a depth of about 0.7 centimeter (with chamfered lead surfaces), and is aligned with reference region 18. When rotor 10 is seated on a drive table of the cooperating analyzer, a projection upstanding from the drive table which houses a temperature sensor is received in socket 36, thus providing coordinated features of close tolerance rotor locating and alignment, and temperature monitoring capability in the analysis region area during mixing and analysis (data acquisition).

Formed in cover member 12 (as indicated in Fig. 1) are a substantially D-shaped central opening 38, a series of three arcuate spacer ribs 40, a circumferential array of first loading ports 42, a second circumferential array of second loading ports 44, and annular recessed optical window channel 30 outwardly of ports 44 and adjacent rim 22. Rotors 10 may be stacked (as indicated diagrammatically in Fig. 2) with three arcuate ribs 40 (each of about sixty degrees angular extent) seating radial projections 41 in the body member 14 that surround opening 38 to provide vertical spacing; and alignment recesses 22, 24 (which are offset by one cuvette from diametrically opposed alignment) received in vertical guide members 46 for automated rotor handling.

The thirty-nine analysis cuvettes 16 are of the same configuration, and further details of a cuvette 16 may be seen with reference to Figs. 4-6. Each cuvette 16 has a length of about three centimeters between cylindrical inner wall surface 50 and planar outer wall surface 52. Surface 52 has an optical surface finish of better than three microinches and defines the inner surface of optical window 28. Each cuvette 16 has substantially parallel side wall surfaces 54 (spaced about 0.5 centimeter apart) adjacent outer wall 52 that bound analysis region 34. Each cuvette 16 also has an inner chamber portion 56 (which is loaded through port 42) and an outer chamber portion 58 (which is loaded through port 44). The surfaces 60 of each cuvette that define the side walls of chambers 56 and 58 diverge at an angle of about nine degrees and are formed by solid webs 62 that are about one millimeter thick.

The two aligned optical window channels 30, 32 are each about 1/2 centimeter wide, with the outer edges 64 of channels 30, 32 located substantially in alignment with outer surface 52 of cuvette 16. The ceiling (upper) and floor (lower) surfaces 66, 68 in each analysis region 34 have optical finishes of better than three microinches (as have surfaces 30, 32 and 52) and are spaced about 3/4 centimeter apart to provide an optical path 70 of about 3/4 centimeter length in each analysis region. Thus, each analysis region 34 is bounded by parallel side surfaces 54 spaced about 1/2 centimeter apart and parallel top and bottom surfaces 66, 68 spaced about 3/4 centimeter apart and has a radial length of about 1/2 centimeter with an effective volume of about one-hundred-fifty microliters. Short transition region wall surfaces 72 (inclined at a 30 degree angle) connect diverging side wall surfaces 60 of chamber 58 (spaced about 5.5 millimeters apart) and side wall surfaces 54 of analysis region 34.

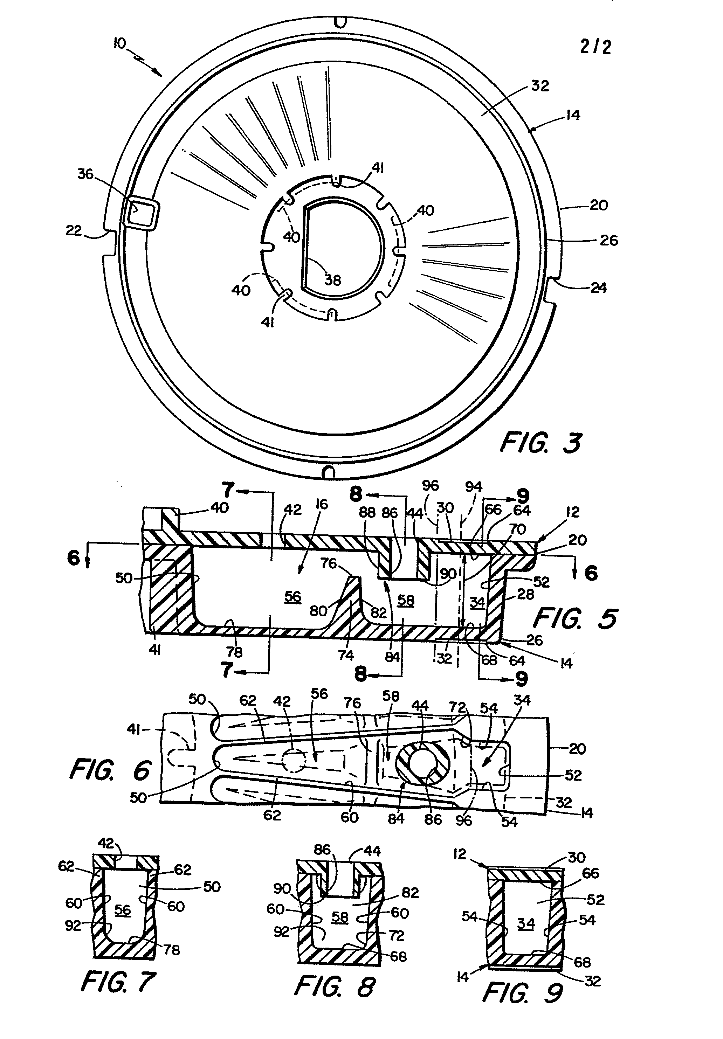

As indicated in Figs. 2 and 4-6, ramp structure 74 separates chambers 56 and 58 and extends between side walls 60. The crest 76 of divider ramp 74 has a radial width of about one millimeter and extends about five millimeters above surface 78 of chamber 56; a planar ramp surface 80 (inclined at an angle of twenty degrees to the vertical) that forms the rear wall of chamber 56; and a planar vertical surface 82 that forms the forward wall of chamber 58, so that chamber 56 has a static capacity of about three-hundred microliters and chamber 58 has a static capacity of about two-hundred-sixty microliters. Port 42 is spaced about 0.6 centimeter from cuvette wall 50, ramp crest 76 is spaced about 1.5 centimeters from wall 50; and port 44 is spaced about 20 centimeters from wall 50. Extending downwardly from cover surface 66 and radially outwardly from ramp 74 is deflector structure 84 that has an inner surface 86 that defines a passage extension of port 44 and an outer surface 88 of elliptical configuration (Fig. 6) - a length (major dimension) of about 0.45 centimeter and a width (minor dimension) of about 0.4 centimeter) - that is spaced about two millimeters from wall 82 of divider ramp 74. The lower surface 90 of deflector structure 84 is located substantially in alignment with (about 1/4 millimeter below) ramp crest surface 76. As indicated in Figs. 4-8, ramp 74 and chamber base surfaces 68, 78 are connected to the adjacent side walls 62 by curved areas 92 (of about 1.5 millimeter radius) that provide smooth and gradual transition surfaces effective to retard premixing due to spontaneous capillary flow of reagent materials along those surface intersections from one chamber to the other over barrier ramp 74.

In use, a stack of rotor assemblies 10 may be initially disposed in aligned orientation (as indicated in Fig. 2) with notches 22, 24 in vertical aligning members 46 and with the upper surface of each rotor spaced from the bottom surface from the rotor immediately above in the stack by spacer webs 40 on which are seated projections 41 so that substantially the entire external surfaces of the cuvette chambers may be exposed to flow of equilibrating fluid. The rotors 10 are successively fed from the stack to a loading

- 10 -

station where the chambers 56, 58 of some or all of the cuvettes 16 are loaded with appropriate reagent and sample materials in conventional manner, one dispensing pipette being inserted through port 44 and deflector structure 84 into chamber 58 and a second dispensing pipette being concurrently inserted through port 42 into chamber 56. After loading, the rotor is transferred to a rotor drive table of a centrifugal analyzer where an aligning projection stub which carries a temperature sensor is inserted into socket 36 as rotor 10 is seated on the table.

In an analysis sequence, rotor 10 is accelerated to about 4000 rpm during a preliminary run to flow reactant materials contained in the inner chambers 56 up the seventy degree ramp surfaces 80 and radially outwardly across ramp crests 76. Those materials flow upwardly and radially outwardly from the ramp crests 76, and are diverted in diverging action around the deflectors 84 and then in converging action by transition surfaces 72 for combining with reactant materials that have been similarly accelerated from the outer chambers 58 into the analysis regions 34. This flow of the stream of reactant material from the inner chambers 56 is above the lower surfaces 90 of deflectors 84 and cover structure is not required to close ports 44 to prevent reactant material from being expelled from those ports. The rotor is then braked to rapidly slow the rotor to further enhance mixing of the reactant materials and then successive photometric measurements are made along optical axis 94 while the rotor 10 is being spun at a speed of about 600 rpm. During the analytical run, centrifugal force drives all of the reactant material in each chamber 56, 58 radially outwardly of the deflector structure 84 and fills the analytical regions 34, the inner margins of the reactant materials (depending on their volumes) being located generally vertically as indicated in chain line 96 in Figs. 5 and 6. Other types of analyses (for example, light scattering or fluorescence) can be made by directing radiation through end windows 28.

The rotor is a compact and mechanically and thermally stable structure which increases throughput and facilitates automated handling. The optimized shape of the analysis chamber regions provides enhanced optical path length (the analytical regions 34 have greater height than width) and permits analyses with reactant volumes in the range of 150 - 300 microliters without requiring covers for ports 42, 44.

While a particular embodiment of the invention has been shown and described, various modifications will be apparent to those skilled in the art, and therefore it is not intended that the invention be limited to the disclosed embodiment or to details thereof, and departures may be made therefrom within the spirit and scope of the invention.

What is claimed is:

- 12 -

1. A multicuvette rotor for use in a centrifugal analyzer that includes a rotor drive for rotating said rotor at rates greater than one thousand rpm for mixing reactants and performing analyses while said rotor is being driven in rotation, said rotor defining a circumferential array of elongated radially extending cuvettes,

each said elongated cuvette including structure defining a first chamber for receiving a first constituent and a loading port through which said first constituent is introduced into said first chamber region, structure defining a second chamber region for receiving a second constituent, a second loading port through which said second constituent is introduced into said second chamber region, divider structure between said first and second chamber regions that defines a transfer passage between said first and second chamber regions through which said first constituent may be flowed into said second chamber region for forming a reaction product with said second constituent, and structure defining an analysis region adjacent the radially outer wall of said cuvette where said reaction product is subjected to analysis, and mechanical interlock structure radially aligned with said analysis regions for receiving a thermal sensor carried by said rotor drive for monitoring analysis region temperature during data acquisition.

2. The rotor of claim 1 wherein said rotor defines a reference position in which said mechanical interlock is disposed, and said mechanical interlock includes a socket for receiving said thermal sensor carried by the rotor support table of the analyzer for thermal monitoring at the radial location of said analysis regions.

3. The rotor of claim 2 wherein said rotor includes a one-piece body member of transparent material that defines a circumferential array of elongated cuvette recesses and has optical window structure aligned with said analysis regions and with said socket, and a one-piece cover member of transparent material that is secured to said body member with a continuous seal extending around each said cuvette recess to define said circumferential array of analytical cuvettes and has similar optical window structure adjacent its periphery that is aligned with said optical window structure in said body member.

4. The rotor of claim 1 wherein said rotor includes a one-piece body member of transparent material that defines a circumferential array of elongated cuvette recesses, and a one-piece cover member of transparent material secured to said body member with a continuous seal extending around each said cuvette recess to define said circumferential array of analytical cuvettes.

5. The rotor of claim 1 wherein said rotor further includes a continuous cylindrical outer wall that defines a series of optical cuvette end windows and solid radial webs that separate the adjacent cuvettes.

6. The rotor of claim 1 wherein the length of the optical path in each said analysis region is greater than the circumferential width or radial length of said analysis region and the volume of each of said first and second chambers is greater than that of said analysis region.

7. A multicuvette rotor for use in a centrifugal analyzer that includes a rotor drive for rotating said rotor at rates greater than one thousand rpm for mixing reactants and performing analyses while said rotor is being driven in rotation, said rotor defining a circumferential array of elongated radially extending cuvettes, and including a one-piece body member of transparent material that defines a circumferential array of elongated cuvette recesses and has optical window structure aligned with said analysis regions and a mechanical interlock socket aligned with said analysis regions for receiving a cooperating interlock member carried by said rotor drive, and a one-piece cover member of transparent material that is secured to said body member with a continuous seal extending around each said cuvette recess to define said circumferential array of analytical cuvettes and has similar optical window structure adjacent its periphery that is aligned with said optical window structure in said body member, each said elongated cuvette recess including structure defining a first chamber for receiving a first constituent with an aligned loading port in said cover member through which said first constituent is introduced into said first chamber, structure defining a second chamber for receiving a second constituent with an aligned second loading port in said cover member through which said second constituent is introduced into said second chamber, divider structure between said first and second chambers that defines a transfer passage between said first and second chambers through which said first constituent may be flowed into said second chamber for forming a reaction product with said second constituent, and structure defining an analysis region adjacent the radially outer wall of said cuvette where said reaction product is subjected to analysis.

8. The rotor of claim 7 wherein said optical window structure in said body member is a recessed annular channel in which said mechanical interlock socket is disposed, and said cover member is a disk that has a similar recessed annular optical window channel adjacent its periphery that is aligned with said annular optical window channel in said body member.

9. The rotor of claim 8 wherein each cuvette of said rotor has a length of about three centimeters, the length of the optical path in each said analysis region is about three-quarters centimeter, said rotor has a diameter of about ten centimeters and an overall height of about one centimeter, and each said annular optical window channel has an inner radius of about four centimeters, a width of about one-half centimeter and a planar base surface that is recessed about one-quarter millimeter and has an optical finish better than three microinches, the inner surfaces of each said analysis region having similar optical quality while other surfaces of the cuvette chambers have greater roughness.

10. The rotor of claim 9 wherein said rotor body member further includes a continuous cylindrical outer wall that defines a series of optical cuvette end windows and solid radial webs of said transparent material separate the adjacent cuvettes.

FIG. 1

FIG. 2

FIG. 4

FIG. 3

FIG. 5

FIG. 6

FIG. 7

FIG. 8

FIG. 9